(19) **Europäisches Patentamt / European Patent Office / Office européen des brevets**

(11) **EP 4 575 448 A1**

(12) # EUROPEAN PATENT APPLICATION

(43) Date of publication:
**25.06.2025 Bulletin 2025/26**

(21) Application number: **23307280.0**

(22) Date of filing: **20.12.2023**

(51) International Patent Classification (IPC):
**G01M 11/02** (2006.01)    **G02C 7/06** (2006.01)
**G02C 7/02** (2006.01)    **G02C 7/08** (2006.01)

(52) Cooperative Patent Classification (CPC):
**G01M 11/0228; G02B 27/0172; G02C 7/024;**
**G02C 7/061; G02C 7/086;** G02B 2027/0178

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **ESSILOR INTERNATIONAL**
**92440 Charenton-Le-Pont (FR)**

(72) Inventors:
- **FRICKER, Sébastien**
  **78000 Versailles (FR)**
- **DIVO, Fabien**
  **95160 Montmorency (FR)**

(74) Representative: **Korakis-Ménager, Sophie**
**Essilor International**
**Propriété Intellectuelle**
**147, rue de Paris**
**94220 Charenton-le-Pont (FR)**

(54) **METHOD FOR DETERMINING VALUES OF PARAMETERS OF AN OPTICAL SYSTEM**

(57) Method for determining values of parameters of an optical system. The optical system comprises a front optical element, a back optical element and a wave guide. The back optical element being intended to be positioned closer to an eye of a wearer of the optical system than the front optical element. The wave guide is between the front optical element and the back optical element. The wave guide has an exit surface being arranged to output an image to the wearer. The method comprises selecting the front optical element among a set comprising a maximum of 6 pre-established front optical elements, determining values of parameters of the back optical element based on an intended power map of the optical system and the selected front optical element. The intended power map is a progressive power map.

[Fig. 1a]

## Description

### Technical field

This disclosure relates to methods for determining values of parameters of an optical system. More precisely the optical system may be dedicated for use in augmented reality eyewear.

### Background information and prior art

Augmented reality eyewear needs specific optical systems. These optical systems may need to provide two types of vision:

- See-through vision allowing the wearer to see the surrounding environment.
- Supplementary image vision, allowing the wearer to see a supplementary image.

Generally, the supplementary image is displayed using a wave guide encapsulated between two optical elements.

The values of the parameters of these optical systems, more precisely of the two optical elements encapsulating the wave guide, must be selected carefully.

There is a need for methods to determine values of parameters of these optical systems.

### Summary

The following presents a simplified summary to provide a basic understanding of various aspects of this disclosure. This summary is not an extensive overview of all contemplated aspects and is intended to neither identify key or critical elements of all aspects nor delineate the scope of any or all aspects. The sole purpose is to present some concepts of one or more aspects in a simplified form as a prelude to the more detailed description that is presented later.

One aspect of this disclosure is a method for determining values of parameters of an optical system. The optical system comprises a front optical element, a back optical element and a wave guide. The back optical element being intended to be positioned closer to an eye of a wearer of the optical system than the front optical element. The wave guide is between the front optical element and the back optical element. The wave guide has an exit surface being arranged to output an image to the wearer. The method comprises selecting the front optical element among a set comprising a maximum of 6 pre-established front optical elements, determining values of parameters of the back optical element based on an intended power map of the optical system and the selected front optical element. The intended power map is a progressive power map.

Another aspect of this disclosure is an optical system. The optical system comprises a front optical element, a back optical element and a wave guide. The back optical element is intended to be positioned closer to an eye of a wearer of the optical system than the front optical element. The wave guide is between the front optical element and the back optical element. The wave guide has an exit surface arranged to output an image to the wearer. The front optical element is selected among a set comprising a maximum of 6 pre-established front optical elements. Values of parameters of the back optical element are determined based on an intended power map of the optical system and the selected front optical element, the intended power map being a progressive power map.

Another aspect of this disclosure is an eyewear. The eyewear comprises an optical system. The optical system comprises a front optical element, a back optical element and a wave guide. The back optical element is intended to be positioned closer to an eye of a wearer of the optical system than the front optical element. The wave guide is between the front optical element and the back optical element. The wave guide has an exit surface arranged to output an image to the wearer. The front optical element is selected among a set comprising a maximum of 6 pre-established front optical elements. Values of parameters of the back optical element are determined based on an intended power map of the optical system and the selected front optical element, the intended power map being a progressive power map.

Another aspect of this disclosure is a computer implemented method for determining values of parameters of an optical system. The optical system comprises a front optical element, a back optical element and a wave guide. The back optical element being intended to be positioned closer to an eye of a wearer of the optical system than the front optical element. The wave guide is between the front optical element and the back optical element. The wave guide has an exit surface being arranged to output an image to the wearer. The method comprises selecting the front optical element among a set comprising a maximum of 6 pre-established front optical elements, determining values of parameters of the back optical element based on an intended power map of the optical system and the selected front optical element. The intended power map is a progressive power map.

Another aspect of this disclosure is a computer program comprising instructions which, when the computer program is executed by a computer, cause the computer to carry out a method for determining values of parameters of an optical system. The optical system comprises a front optical element, a back optical element and a wave guide. The back optical element being intended to be positioned closer to an eye of a wearer of the optical system than the front optical element. The wave guide is between the front optical element and the back optical element. The wave guide has an exit surface being arranged to output an image to the wearer. The method comprises selecting the front optical element among a set comprising a maximum of 6 pre-established front optical elements, determining values of parameters of the back optical element based on an intended power map of the optical system and the selected front optical element. The intended power map is a progressive power map.

A computer may include a memory and a processor. Examples of processors include microprocessors, microcontrollers, graphics processing units (GPUs), central processing units (CPUs), application processors, digital signal processors (DSPs), reduced instruction set computing (RISC) processors, systems on a chip (SoC), field-programmable gate arrays (FPGAs), programmable logic devices (PLDs), state machines, gated logic, discrete hardware circuits, and other suitable hardware configured to perform the various functionality described throughout this disclosure. The memory may be a computer-readable media. By way of example, and not limitation, such computer-readable media may include a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that may be used to store computer executable code in the form of instructions or data structures that may be accessed by the processor of the computer.

Another aspect of this disclosure is a non-transitory program storage device, readable by a computer, tangibly embodying a program of instructions executable by the computer to perform a method for determining values of parameters of an optical system. The optical system comprises a front optical element, a back optical element and a wave guide. The back optical element being intended to be positioned closer to an eye of a wearer of the optical system than the front optical element. The wave guide is between the front optical element and the back optical element. The wave guide has an exit surface being arranged to output an image to the wearer. The method comprises selecting the front optical element among a set comprising a maximum of 6 pre-established front optical elements, determining values of parameters of the back optical element based on an intended power map of the optical system and the selected front optical element. The intended power map is a progressive power map.

### Description of the drawings

For a more complete understanding of the description provided herein and the advantages thereof, reference is now made to the brief descriptions below, taken in connection with the accompanying drawings and detailed description, wherein like reference numerals represent like parts.

Figures 1 a and 1 b represent an optical system.
Figure 2 represents eyeglasses.
Figure 3 represents a first embodiment of a method for determining values of parameters of the optical system.
Figure 4 represents progression profiles of front optical elements 13 at various prescribed addition values.
Figure 5 represents a second embodiment of a method for determining values of parameters of the optical system.
Figures 6 to 9 represent, for different examples, the power map of the back optical element, the front optical element and the combination of the back optical element and the front optical element.

### Detailed description of embodiments

The detailed description set forth below in connection with the appended drawings is intended as a description of various possible embodiments and is not intended to represent the only embodiments in which the concepts described herein may be practiced. The detailed description includes specific details for the purpose of providing a thorough understanding of various concepts. However, it will be apparent to those skilled in the art that these concepts may be practiced without these specific details. In some instances, well-known structures and components are shown in block diagram form to avoid obscuring such concepts.

### *Optical system*

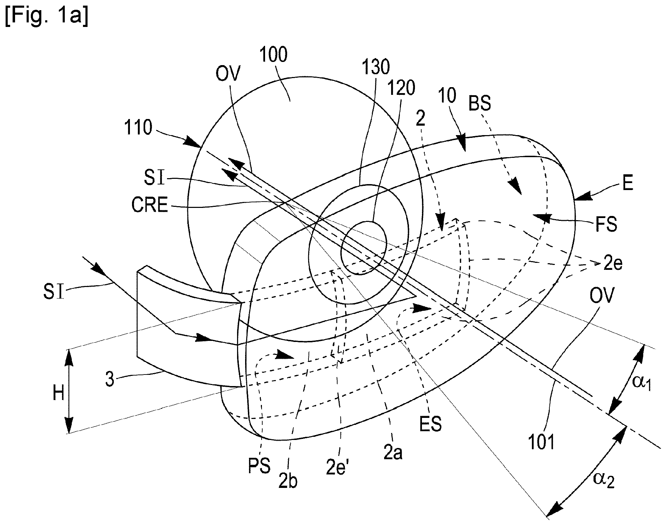

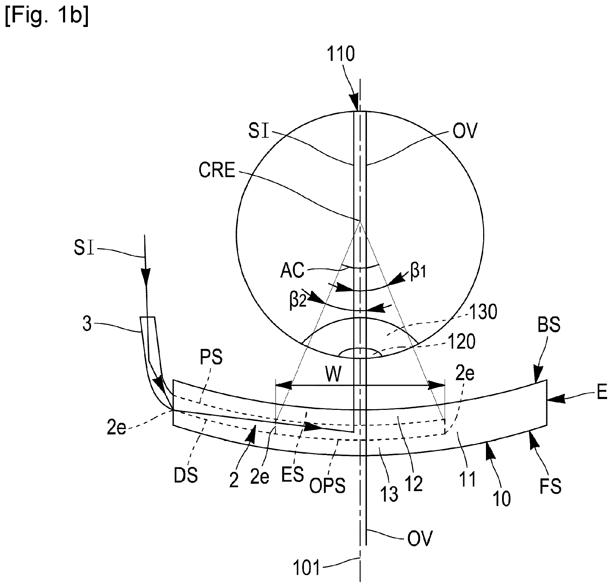

Figures 1 a and 1 b illustrate an optical system 10 which provides both a see-through vision TV and a supplementary vision SV by outputting a supplementary image SI to an eye 100 of a wearer. The optical system 10 may be capable of correcting the see-through vision TV of the wearer. The optical system 10 comprises a back optical element 12 and a front optical element 13 where the back optical element 12 is positioned closest to the eye of the wearer when the optical system 10 is worn. The optical system 10 also comprises a wave guide 2 arranged to output the supplementary image SI to the wearer through an exit surface ES of the wave guide 2.

As presented in figures 1 a and 1 b, the wave guide 2 is located between the back optical element 12 and the front optical element 13. The term 'between' here indicates that several points on a part of the waveguide 2 are each aligned with corresponding points on both the back optical element 12 and the front optical element 13. Additionally, when the optical system (10) is worn, these aligned points are also aligned with a point on the eye of the wearer, for example a point on the retina.

**The** see-through vision TV is the vision when the wearer is looking at the surrounded environment. The see-through vision TV is also called ophthalmic vision OV.

As presented in figure 1 a and 1 b, the front optical element 13 and the back optical element 12 may be monobloc. In this case the wave guide 2 is enclosed in this monobloc. In this case one can use the expression of front portion to designate the front optical element 13 and the expression of back portion to designate the back optical element 12.

**The** front optical element 13 and the back optical element 12 may be each an ophthalmic lens. In this case an air gap may be present between the front optical element 13 and the wave guide 2 and between the back optical element 12 and the wave guide 2.

In the case of the previous section, the front optical element 13 and the back optical element 12 may be constituted of the same transparent and refringent material of a different transparent and refringent material.

The exit surface may face the eye of the wearer.

**The** wave guide 2 may be an embedded wave guide optical element.

According to the embodiment of figures 1-a and 1-b, the proximal surface PS and the distal surface DS are parallel surfaces.

According to another embodiment, the proximal surface PS and the distal surface DS are non-parallel surfaces.

According to the embodiment of figures 1 a and 1 b, the proximal surface PS and/or the distal surface DS is a (are) plane surface(s).

According to another embodiment, the proximal surface PS and/or the distal surface DS is (are) curved surface(s); such a curved surface is for example a spherical surface, a toric surface, a sphero-toric surface; such a curved surface can also be an aspherized spherical or toric or sphero-toric surface.

The wave guide 2 is made of a transparent and refringent material. The refractive index of the transparent and refringent material constituting the wave guide 2 may be identical, slightly different or significantly different to the refractive index of the transparent and refringent material constituting the back optical element 12 or to the refractive index of the transparent and refringent material constituting the front optical element 13.

According to the embodiment of figures 1 a and 1 b, a proximal surface PS of the wave guide 2 and a distal surface DS of the wave guide 2 are parallel surfaces. The proximal surface PS of the wave guide 2 is the surface of the wave guide 2 the closest to the eye of the wearer when the wearer is wearing the optical system 10.

According to another embodiment, the proximal surface PS and the distal surface DS are non-parallel surfaces.

According to the embodiment of figures 1 a and 1 b, the proximal surface PS and/or the distal surface DS is a (are) plane surface(s).

According to another embodiment, the proximal surface PS and/or the distal surface DS is (are) curved surface(s); such a curved surface is for example a spherical surface, a toric surface, a sphero-toric surface; such a curved surface can also be an aspherized spherical or toric or sphero-toric surface.

When the back optical element 12 and the front optical element 13 are monobloc, the monobloc has a front surface FS and a back surface BS. The back surface BS is the surface of the monobloc the closest to the eye of the wearer when the optical system 10 is worn. The front surface FS may be convex, and the back surface BS may be concave. An optical power of the optical system 10, for the see-through vision TV depends on respective curvatures of the surfaces FS and BS and the light refractive index of the material of the optical system 10.

When the back optical element 12 is a back ophthalmic lens and the front optical element 13 is a front ophthalmic lens, each of the back ophthalmic lens and the front ophthalmic lens has a front surface and a back surface. The optical power of the optical system 10, for the ophthalmic vision OV depends on respective curvatures of the back and front surfaces of the back and front ophthalmic lenses and respective refractive indexes of the back and front ophthalmic lenses.

The wave guide 2 is configured to bring supplementary light from a source which is not represented in detail so as to produce a supplementary image SI. The structure of the wave guide 2 is not the subject of this description, and reference can be made to other documents available on this subject. One example of a suitable wave guide is described in PCT application WO2005024491 or WO200195027 in the name of the LUMUS Company.

The supplementary image SI may be distorted by the optical properties of the optical system 10. When the optical system 10 is monobloc and the exit surface of the wave guide 2 is planar, or when the refractive of the material of the monobloc is equal to the refractive index of the material of the wave guide 2, the distortion depends on the curvature of the back surface BS of the monobloc and the refractive index of the material of the monobloc. When the optical system 10 is constituted of a front ophthalmic lens and a back ophthalmic lens, the distortion depends on a curvature of a back surface of the back ophthalmic lens, a curvature of a front surface of the back ophthalmic lens and a refractive index of the material of

**EP 4 575 448 A1**

the back ophthalmic lens.

The wave guide 2 is limited transversely within an area of the optical system 10 in certain directions approximately parallel to the front surface FS and the back surface BS. In such a configuration, the front portion 13 and the back portion 12 of the optical system 10 extend beyond a peripheral edge 2e of the wave guide 2. The optical system 10 then has an intermediate portion 11 which extends beyond the edge 2e of the wave guide 2 and which continually links the portions 13 and 12 to a peripheral edge E of the optical system 10.

The wave guide 2 may be virtually divided in two zones 2a and 2b separated by a virtual edge 2e'. Zone 2a is the imaging part wherefrom does the supplementary image SI come from according to the eye of the wearer; zone 2b is a propagation part wherein the supplementary image is propagated from the source 3 without supplying an image to the wearer.

The edge of zone 2a is the contour of the supplementary image SI output by the wave guide 2. The supplementary image SI intercepts the proximal surface PS according to an exit surface ES. One names "opposite surface" OS the surface corresponding to the exit surface ES on the distal surface. According to the present example the imaging part is substantially a rectangle whose width is W and whose height is H.

According to a commonly used optical referential, the exit surface ES is defined by an angular aperture contour, denoted AC(a,$\beta$), $\alpha$ being the eye declination angle and $\beta$ being the eye azimuth angle, $\alpha$, $\beta$ pole is the center of rotation, CRE, of the eye 100 of the wearer behind the lens. 101 corresponds to the axis where $\alpha = \beta = 0$.

According to an example, the aperture AC may be +/-15° (degree) either side of an optical axis of the supplementary vision, which passes through the center of the exit surface ES. Said aperture is defined in the azimuthal plane by $|\beta_1| + |\beta_2|$. It is defined in the perpendicular plane by $|\alpha_1| + |\alpha_2|$. The generatrix lines of the limit of the angular aperture contour intersect the back surface BS of the lens in an area in which the two visions, see-through and supplementary, are superposed. In the configuration of figures 1 a and 1 b, the respective optical axes of the see-through vision and of the supplementary vision are one and the same, but they may be distinct.

Figures 1 a and 1 b represent the optical system 10 in the position of use by the wearer. The eye of the wearer 100 is therefore situated behind the optical system 10 on the side of the back surface so that it receives, on the one hand, light corresponding to the see-through vision TV and originating from the environment, which is situated in front of the lens, and, on the other hand, the light corresponding to the supplementary image SI which is brought by the wave guide 2. The light beams of the two lights TV and SV correspond respectively to the see-through vision TV and to a supplementary vision SV. They respectively form, after having passed through the pupil 120, an see-through image and a supplementary image on the retina 110 of the wearer. The reference 130 designates the iris of the wearer which surrounds his pupil 120. The direction in which the wearer is looking corresponds to the optical axis of the eye 100. It intersects the surfaces FS and BS of the optical system 10 at respective points which vary when the eye 100 turns in the orbit of the wearer.

The optical system 10 may be integrated in an eyewear, for example in eyeglasses.

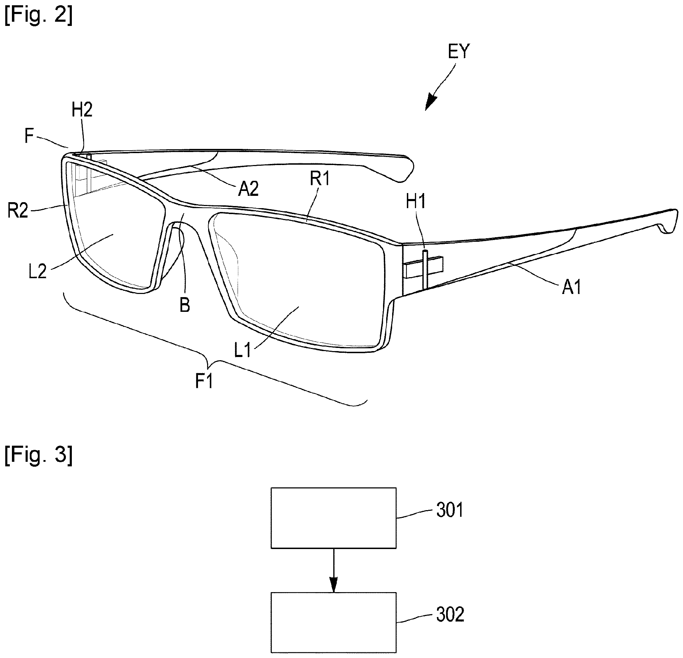

The eyeglasses may rest on the nose and over the ears of the wearer. The figure 2 represents an embodiment of eyeglasses EY. The eyeglasses EY may comprise two lenses L1 and L2 and a frame F. One or both of the lenses L1 and L2 may be the optical system 10 previously presented. The frame F may comprise two arms or temples A1 and A2 and a front part F1. The front part F1 may comprise a right rim R1 and a left rim R2 linked together by a bridge B. The front part F1 and the two arms A1 and A2 may be linked using two hinges H1 and H2. The hinges H1 and H2 may allow the folding of the arms A1 and A2 along the front part F1. The rims R1 and R2 of the frame F1 may be configured to receive and to maintain the lenses L1 and L2.

The back optical element 12, the front optical element 13, the optical system 10 may have a power depending on the part of the element considered. Each of these elements may for example have a far vision part, an intermediate vision part and a near vision part all these parts having a different power.

The far vision part is intended to be used by the wearer in far vision activities. The near vision part is intended to be used by the wearer in near vision activities. The intermediate vision part is intended to be used by the wearer in intermediate vision activities. In other words, the far vision part of an element is the part crossed by a gaze axis of the wearer when the wearer is in far vision activities. The near vision part of an element is the part crossed by a gaze axis of the wearer when the wearer is in near vision activities. The intermediate vision part of an element is the part crossed by a gaze axis of the wearer when the wearer is in intermediate vision activities.

To determine the near vision part and the far vision part of an optical element, for example ophthalmic lenses, one may use the prescription associated to the optical element and a power map of the optical element obtained using a lens mapper. Using the power map, one may determine the far vision part by finding the part of the optical element with a power between the far vision mean sphere, and the far vision mean sphere plus 15% of the prescribed addition. Using the power map, one may determine the near vision part by finding the part of the optical element with a power between the far vision mean sphere plus 85% of the prescribed addition, and the far vision mean sphere plus 100% of the prescribed addition. Generally, the intermediate vision part is located between the far vision part and the near vision part, for example at equidistance of the far vision part and the near vision part.

Far vision activities are when one looks at objects when accommodation is not necessary; in theory, objects at

5

infinity, but generally one considers that objects farther than 3 meters are seen using far vision. Near vision activities are when one looks at close objects, generally less than 0.5 meters, for example, when reading a book. Intermediate vision activities are when one looks at objects located between 0.5 meters and 5 meters.

During supplementary vision SV, only the power of the back optical element 12 is considered to determine the power of the optical system 10. During see-through vision TV the power of the back optical element 12 and the power of the front optical element 13 are considered to determine the power of the optical system 10.

When considering the power of the near vision part of the optical system 10, the power of the near vision part of the back optical element 12 and possibly of the front optical element 13 are considered.

When considering the power of the intermediate vision part of the optical system 10, the power of the intermediate vision part of the back optical element 12 and possibly of the front optical element 13 are considered.

When considering the power of the far vision part of the optical system 10, the power of the far vision part of the back optical element 12 and possibly of the front optical element 13 are considered.

A prescription generally comprise a power dedicated to the far vision and an addition dedicated to the near vision. The power of a far vision part of an optical element (for example the optical system 10) complying with a prescription may be obtained directly from the far vision part of the prescription. The power of a near vision of the optical element complying with the prescription may be obtained by adding the addition of the prescription to the power of the far vision part of the prescription.

Generally, when worn by a standing wearer, the near vision part of an optical element is located below the far vision part, and the intermediate vision part is situated between the near vision part and the far vision part for example at equidistance of the far vision part and the near vision part.

### *Method for determining values of parameters of the optical system*

The figure 3 represents a first embodiment of a method for determining values of parameters of the optical system 10. The method of the figure 3 may be for example a computer implemented method.

The method of the figure 3 may be implemented in a computer comprising a memory and a processor.

Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field-programmable gate arrays (FPGAs), programmable logic devices (PLDs), state machines, gated logic, discrete hardware circuits, and other suitable hardware configured to perform the various functionality described throughout this disclosure.

The memory may be computer-readable media. By way of example, and not limitation, such computer-readable media may include a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that may be used to store computer executable code in the form of instructions or data structures that may be accessed by the processor of the computer.

As presented in figure 3 the method for determining values of parameters of the optical system 10 may comprise, in a first embodiment:

- a step 301 of selecting the front optical element 13 among a set comprising a maximum of 6 pre-established front optical elements,
- a step 302 of determining values of parameters of the back optical element 12 based on an intended power map of the optical system 10 and the selected front optical element.

The method of the figure 3 has the advantage of using a front optical element 13 that is selected among a limited number of types and can be produced by mass-production techniques for cost efficiency. The back optical element 12 may be specific to each wearer and may be custom-made. If the front optical element 13 is common to all prescriptions and located at a fixed position in the frame (regardless of the fitting position of wearer), then the front optical element 13 may potentially introduce prismatic effects or aberrations in see-through vision TV. The back optical element 12 may be optimized to cancel or minimize these prismatic effects or aberrations, taking into account the actual half pupillary distance and fitting height of the wearer.

In other words, using the method of the figure 3 one may use a front optical element 13 that can be mass produced, from a set of limited number of front optical elements having different additions, and a limited power (between 0 and 2 dioptres). The power of the front optical element 13 must not be above a certain level. Indeed, a high power of front optical element 13 implies a back optical element with a negative power with high absolute value, and therefore the wearer has to accommodate to focus on the supplementary image. The back optical element 12 may advantageously be an individualized lens (for example of free form type), having power variations in a limited range. The back optical element 12 will affect the way the supplementary image is seen. The combination of the front optical element 13 and the back optical element 12 will affect the see-through vision TV.

In embodiments the step 301 of selecting the front optical element 13 may be realized also based on half pupillary distance of the wearer.

In embodiments the step 301 of selecting the front optical element 13 may be realized also based on a fitting height of the wearer.

The parameters of the back optical element 12, that could be optimized using one of the methods described below, may be an optical power value, astigmatism values, optical distortion values. The values of these parameters may depend on the part of the back optical element 12 that is considered. For example, the black optical element 12 may comprise a far vision part and a near vision part and the values of the parameters may be different depending on which of the two parts is considered.

In other embodiments the parameters of the back optical element 12 may comprise:

- a refractive index of a material forming the back optical element 12,
- a shape of a back surface of the back optical element 12 and
- a shape of a front surface of the back optical element 12.

When the wave guide 2 is not flat, the method may also use values of parameters of the wave guide 2, for example parameters representing a curvature of a back surface of the wave guide 2 or a reflective index of a material of the wave guide 2, to determine the values of the parameters of the back optical element 12.

The pre-established front optical elements may have all, in a far vision part, a power of less than 1.5 diopter, for example less than 1 diopter.

In embodiments, the wave guide 2 may be configured so that the supplementary image is displayed partly in the far vision part of the optical system 10 and partly in the near vision part of the optical system 10.

In embodiments, when a power of a far vision part of a first pre-established front optical from the set of the pre-established front optical elements is higher than a power of a far vision part of a second pre-established front optical from the set of the pre-established front optical elements, then a power of a near vision part of the first pre-established front optical is lower than a power of a near vision part of the second pre-established front optical.

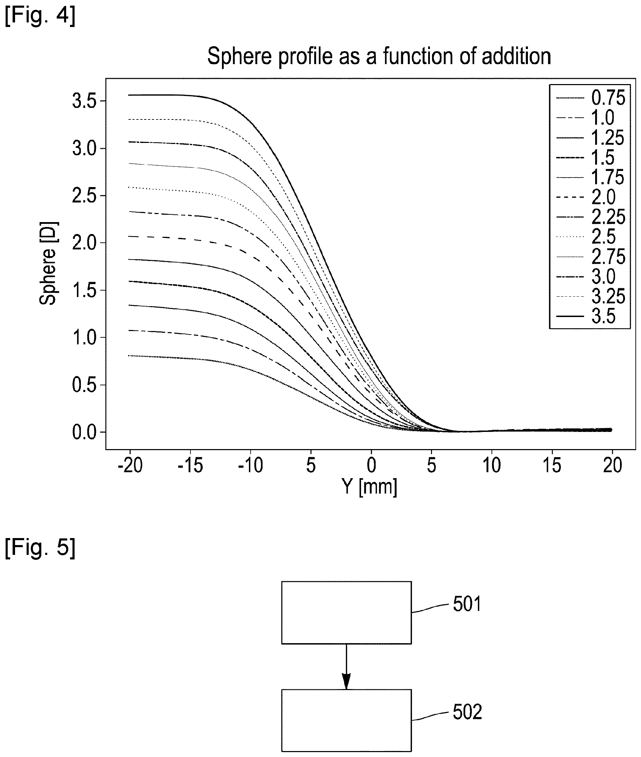

Different methods may be used to determine the set of the pre-established front optical elements. The figure 4 represents progression profiles of front optical elements 13 at various prescribed addition values. The horizontal axis corresponds to the vertical position in mm along the horizontal median line of the front optical element 13. The origin corresponds to the prism reference point. When this position is negative, its means that the position is below the horizontal median line, therefore in the part of the front optical element 13 dedicated to near vision. The vertical axis corresponds to the power at a given position. The pre-established front optical elements may be separated in two sets of each 3 pre-established front optical elements.

The first set may comprise:

- an optical element with a far vision part with a power between 0.25 and 0.75 diopter, for example 0.5 diopter and a near vision part with a power between 1.5 diopters and 2 diopters for example 1.75 diopters,
- an optical element with a far vision part with a power between 0.0 diopter and 0.5 diopter for example 0.0 diopter and a near vision part with a power between 2.5 diopters and 3 diopters for example 2.75 diopters,
- an optical element with a far vision part with a power between 0.0 diopter and 0.5 diopter for example 0.0 diopter and a near vision part with a power between 3.25 diopters and 3.75 diopters for example 3.5 diopters,

The second set may comprise:

- an optical element with a far vision part with a power between 0.25 and 0.75 diopter, for example 0.5 diopter and an intermediate vision part with a power between 0.75 diopter and 1.25 diopter for example 1 diopter,
- an optical element with a far vision part with a power between 0.0 diopter and 0.5 diopter for example 0.0 diopter and an intermediate vision part with a power between 1.25 diopters and 1.5 diopters for example 1.5 diopters and
- an optical element with a far vision part with a power of 0.0 diopter and an intermediate vision part with a power between 1.5 diopters and 2 diopters for example 1.75 diopters.

The intended power map of the optical system 10 is the power at different parts of the optical system 10 (for example near vision part, intermediate vision part and far vision part) for see-through vision TV.

In embodiments, the intended power map is determined using the prescription of the wearer. As already explained previously, the prescription generally comprise a power dedicated to the far vision and an addition dedicated to the near vision. The power of a far vision part of an optical element (for example the optical system 10) complying with a prescription may be obtained directly from the far vision part of the prescription. The power of a near vision of the optical element complying with the prescription may be obtained by adding the addition of the prescription to the power of the far vision part of the prescription.

In embodiments, the intended power map is an unifocal power map. In embodiments the front optical element 13 and the values of the parameters of the back optical element 12 may be determined such that the combination of both for see through vision provide an unifocal power. In embodiments the front optical element 13 may have an addition for near vision of 1 diopter. The values of the parameters of the back optical element 12 are determined so that the combination of the front optical element 13 and the back optical element 12 provides the power map of the prescription of the wearer.

In embodiments, the intended power map is a progressive power map. In these embodiments, the intended power map may comprise a far vision part dedicated to far vision and a near vision part dedicated to near vision. The intended power map may also comprise an intermediate vision part dedicated to intermediate vision. Using the method of figure 3, the front optical element 13 is firstly selected. The front optical element 13 may be selected based on a prescription of the wearer. For example, one may select a front optical element 13 with an addition (as defined as the power of the near vision part minus the power of the far vision part) above or equal to the prescribed addition. Then the values of the parameters of the back optical element 12 are determined by taking into account the prescription of the wearer. In embodiments, when the values of the parameters of the back optical element 12 are not feasible or do not achieve predefined criterium, another front optical element 13 is selected and other values of the parameters of the back optical element 12 are determined.

Therefore, using the method of the figure 3 one may determine the values of the parameters of the optical system 10, with progressive correction and while using a limited set of front optical element 13. This will allow to manufacture these front optical elements 13 with mass production techniques (injection or casting), therefore reducing production costs.

In embodiments the step 301 of selecting the front optical element 13 among a set comprising a maximum of 6 pre-established front optical elements and the step 302 of determining values of parameters of the back optical element 12 based on an intended power map of the optical system 10 and the selected front optical element, may be realized by:

- Obtaining the prescription of the wearer and values of physiological parameters of the wearer, for example half pupillary distances and fitting heights.
- Determining the location of the part of the optical system 10 covered by the wave guide 2. This location of the part may be defined by the extreme angle ($\alpha$ and $\beta$) of the gaze axis of the eye of the wearer when he is gazing at the supplementary image provided by the wave guide 2.
- Determining the residual accommodation of wearer. By residual accommodation one means the maximum power that an eye (more precisely the lens of the eye) can provide to see clearly as close as possible. To determine the residual accommodation, one may use the age of the wearer. One may also use the prescribed addition, generally the prescribed addition is based on 2/3 of the residual accommodation.
- Defining, based on the prescription of the wearer, the intended power map of the optical system 10.
- Selecting, based on the prescribed addition and possibly the location of the part of the optical system 10 on which the image is displayed by the wave guide 2, one of the front optical elements of the set of pre-established front optical elements. In embodiments each of the pre-established front optical elements is associated to range of prescribed additions. In embodiments when the part of the optical system 10 on which the image is displayed by the wave guide 2 comprises the far vision part of the optical system 10, the intermediate vision part of the optical system 10, and the near vision part of the optical system 10, then a pre-established front optical element with an addition close but superior to the prescribed addition may be selected. The addition of an optical element may be calculated by subtracting the power of the far vision part of the optical element to the power of the near vision part of the optical element. In embodiments when the part of the optical system 10 on which the image is displayed by the wave guide 2 comprises only the intermediate vision part of the optical system 10, and the near vision part of the optical system 10, then a pre-established front optical element with an addition close but superior to half of the prescribed addition may be selected.
- Determining the values of a power map of the back optical element 12, by subtracting a power map of the selected front optical element to the intended power map of the optical system 10. The values of a power map of the back optical element 12 may also be determined by optimizing the power map of the back optical element 12 to the intended power map of the optical system 10 and the power map of the selected front optical element. To realize this optimization, one may rely on the article of Pascal Allione, Francoise Ahsbahs, and Gilles Le Saux "Application of optimization in computer-aided ophthalmic lens design", Proc. SPIE 3737, Design and Engineering of Optical Systems II, (27 August 1999); https://doi.org/10.1117/12.360002.

In embodiments, the method of the figure 3 may also comprise a step of determining a power for a part of the back optical element 12 by subtracting a power of a corresponding part of the front optical element 13 to a power of a corresponding part of the intended power map.

The figure 5 represents another embodiment of the method for determining the values of the parameters of the optical system 10.

In the embodiment of the figure 5, the method comprises:

- A step 501 of determining values of parameters of a first part of the front optical element 13 corresponding to the near vision part of the optical system 10 and values of parameters of a second part of the front optical element 13 corresponding to the far vision part of the optical system 10 based on the intended power map of the optical system,
- A step 502 of determining values of parameters of a first part of the back optical element 12, corresponding to the near vision part of the optical system 10 and values of parameters of a second part of the back optical element 12 corresponding to the far vision part of the optical system 10 based on an intended power map of the optical system and so that the back optical element 12 is of regressive type.

The near vision part of the front optical element 13 may correspond to the near vision part of the optical system 10. In this case the first part of the front optical element 13 is the near vision part of the front optical element 13. The far vision part of the front optical element 13 may correspond to the far vision part of the optical system 10. In this case the second part of the front optical element 13 is the far vision part of the front optical element 13. The near vision part of the back optical element 13 may correspond to the near vision part of the optical system 10. In this case the first part of the back optical element 12 is the near vision part of the back optical element 12. The far vision part of the back optical element 12 may correspond to the far vision part of the optical system 10. In this case the second part of the back optical element 12 is the far vision part of the back optical element 12.

In other words, the basic principle of the method of the figure 5 is to use a specific combination of optical elements:

- One back optical element 12 providing a spherical power, depending at least on the wearer gaze lowering, with more accommodative demand when looking in the near vision part (bottom of the back optical element) versus far vision of the back optical element when looking supplementary image. The back optical element 12 also depends on the wearer prescription, in particular on the prescribed addition.
- One front optical element 13 providing variable spherical power (typically progressive lens, but could be multifocal lens, or other design), to compensate the back optical element variable power, and design so that combination of the front optical element and the back optical element lens provides wearer prescription for far and near vision.
- One wave guide 2 providing, at infinity distance, a supplementary image.

By a back optical element 12 being of regressive type, one means a back optical element 12 with a power of a far vision part that is higher than a power of near vision part.

Having a back optical element 12 being of regressive type allows respecting the natural accommodation behavior when looking from the top to the bottom of the supplementary image. Wearers are used to increase their accommodation when looking from top to bottom in a real-life scene. Indeed, the power of the back optical element 12 decreases as gaze lowering increases, then the wearer has to increase his accommodation when gazing down, which is a natural accommodation behavior.

In embodiments the front optical element 13 and the back optical element are designed so that a combination of the front optical element 13 and back optical element 12 provides variable (PAL/Antifatigue) or constant (SV) power adapted for see-through vision TV. This power should satisfy the prescribed powers for far vision and near vision. The global power depends on the eye gaze vertical direction ($\alpha$) and related world side distance Dist($\alpha$). As a consequence, real objects located in the line of sight with the corresponding world side distance will be virtual located at a new distance Dseethrough($\alpha$). This global power is defined according to the wearer prescription, typically provides far vision correction for straight away gaze direction, and near vision correction for lowered gaze direction, with intermediate values in between. It can be prescription for presbyopic, non-presbyopic (antifatigue with small amount of addition), or even emmetropes.

Advantageously the back optical element 12 may be designed to provide power to the supplementary image, during supplementary vision SV, so that the new distance (distance modified by the back optical element 12) is such that Dvirtual($\alpha$) is same, or smaller than Dseethrough($\alpha$).

The apparent proximity (inverse of distance, in D) is less that then the maximal accommodation power of the wearer. Conversely, the apparent distance must be larger than the *punctum remotum* of the wearer.'.

Dvirtual($\alpha$) may be configured so that it decreases with $\alpha$. Such that the wearer accommodates progressively when gazing from the top to the bottom of the supplementary image.

Here, in the following examples, one assumes the wearer is emmetropic but needs correction for near vision (presbyopic wearer, or solution for visual fatigue providing small amount of addition power). In case of ametropic wearer, one needs to add far vision refraction to the back optical element 12.

In addition, the following examples and method propose different design for back and front optical elements, starting with back optical element 12 to then determine front optical element 13. Other alternatives are possible, for instance using not fully customized front optical element 13, but using the set of the pre-established front optical elements having different near vision power and far vision power and selecting the front optical element among this set. The near vision power and the far vision power may be also expressed as a couple power for far vision and addition. The addition is to be added at the power for far vision, to obtain the power of the near vision. For example, one may select the pre-established front optical element, having the closer property - addition for instance - vs the calculated property for the front optical element 13 according to the method described below.

The method is based on design conditions that can be expressed analytically using the following variables:

Sfront(FV) = Spherical power of the front optical element 13 in far vision
Sback(FV) = Spherical power of the back optical element 12 in far vision
Sfront(NV) = Spherical power of the front optical element 13 in near vision
Sback(NV) = Spherical power of the back optical element 12 in near vision
Rx = Prescribed far vision power
Add = Prescribed addition
Prox(NV) = Object proximity in near vision
P(FV) = see-through vision TV power in far vision
P(NV) = see-through vision TV power in near vision
Acc = Maximum (respectively comfortable) accommodation of wearer that the lens will require.

The maximum accommodation can be approximated as follows (for addition values up to Prox(NV)):

- 

$$Acc = 3/2(Prox(NV) - Add) \; [EQ1].$$

In the above equation one assumes that a lens addition is prescribed such that the wearer engages 2/3 of his maximum accommodation when looking at near.

To have the combination of the front optical element 13 and the back optical element 12 that provides global variable (PAL/Antifatigue) or constant (SV) power adapted for see-through vision TV, one may consider, in first approximation, that the total power is the sum of the front power and back power:

- 

$$Rx = Sfront(FV) + Sback(FV) \; [EQ2].$$

- 

$$Rx + Add = Sfront(NV) + Sback(NV) \; [EQ3].$$

Considering that the back optical element 12 provides power such that the virtual image appears closer than the see-through image, one may consider that in far vision:

Dvirtual(FV) <= Dseethrough(FV)
Sback(FV) <= Sfront(FV) + Sback(FV)
0 <= Sfront(FV).

The last equation allows having the front optical element having a positive or zero power, otherwise the wearer would have to deaccomodate.

In near vision one may consider that:

- Dvirtual(NV) <= Dseethrough(NV).
- Sback(NV) <= Sfront(NV) + Sback(NV) - Prox(NV).
- Prox(NV) <= Sfront(NV) [EQ5].

To have the apparent distance of the supplementary image, Dvirtual($\alpha$), less than the wearers's maximum accommodation power one may consider in far vision that:

- Rx - Sback(FV) <= Acc.

- Sback(FV) >= Rx - Acc [EQ6].
- Sfront <= Acc [EQ7].

One may consider in near vision:

- Rx - Sback(NV) <= Acc.
- Sback(NV) >= Rx - Acc [EQ8].
- Sfront(NV) - Add <= Acc.
- Sfront(NV) <= Acc + Add [EQ9].

To have Dvirtual($\alpha$) decreases with angle $\alpha$ (back optical element of regressive type) one may consider that:

- Sback(NV) <= Sback(FV) [EQ10],

By combining the requirements related to the back optical element:

[EQ2] + [EQ4]

- 0 <= Rx - Sback(FV).
- Sback(FV) <= Rx [EQ11]

[EQ3] + [EQ5]

- Prox(NV) <= Rx + Add - Sback(NV).
- Sback(NV) <= Rx + Add - Prox(NV) [EQ12],

By combining [EQ6], [EQ8], [EQ10], [EQ11], [EQ12], one obtains the following conditions related to the power of the back optical element:

- Rx - Acc <= Sback(FV) <= Rx.
- Rx - Acc <= Sback(NV) <= Rx + Add - Prox(NV).
- Sback(NV) <= Sback(FV).

In other words, the method of the figure 5, when assuming the wearer is emmetropic (otherwise adding to the back optical element 12 the far vision prescription), comprises:

- Retrieving the prescription of the wearer, the prescription may comprise a value of sphere, cylinder, axis and possibly addition.

    For the back optical element 12 defining for far vision the distance of the supplementary image. Typically, it is set between 0.8m and 1.5m/2m.
    Since the wave guide 2 provides supplementary image at infinity, one defines the power of the back optical element as the inverse of the defined distance of the supplementary image.
    Sback(aFV) = -1/Dvirtual($\alpha$FV).

- Defining supplementary image distance for near vision. This distance is closer than far vision, so that accommodation demand is higher for near vision than for far vision, to be consistent with see-through vision TV.

    The near vision distance is determined according to the wearer accommodation amplitude.
    Indeed, one needs to avoid having a supplementary image closer than the accommodation amplitude, otherwise the wearer will not see it clearly.
    One possible assumption is that supplementary image is positioned as same distance, or slightly closer, as see-through distance :

        Dist($\alpha$) is defined according to classical ergorama : infinity for far vision ($\alpha > 0$), 33 cm for Near vision ($\alpha = 30°$), and intermediate distance for angle in between. Dseethrough($\alpha$) = DistanceErgorama ($\alpha$).
        Dvirtual ($\alpha$) = k.DistanceErgorama($\alpha$), with k <=1.
        Sback($\alpha$) = -1/Dvirtual($\alpha$).

- Adjusting power variation between far vision and near vision of the back optical element 12 to have a negative addition (regressive surface). One may define the amount of negative addition, or one may define power gradient, depending on the application for supplementary image.

For instance, if one needs to have a supplementary image with continuous distance variation between far vision and near vision, and having a large field of view (>20°), it is preferable to have limited addition (abs(Addition)<1D. "abs" means absolute value. When, in the same situation, one wants a display of the supplementary image limited to a small part of the field of view (for instance small notifications message in var vision part or near vision part), a larger addition may be accepted since distortion will be less visible with small supplementary image.

When in the same situation, one needs a supplementary image with large field of view in far vision part, and a large field of view in near vision part, one may adopt large addition but using stabilized power area for both far vision and near vision, so generating a large power gradient and distortion outside of the area on which the supplementary image is displayed.

- Defining the values of the parameter of the front optical element 13. The front optical element 13 is determined so that the combined power of the front optical element 13 and the back optical element 12 (and possibly the wave guide 2, that could provide limited impact) provide to the wearer the good correction, corresponding to his prescription.

This can be obtained through ray tracing for instance, having a defined power distribution target for the combination (can be a progressive design, or single vision target), and modifying /optimizing the front surface of the front optical element 13 to get a solution as close as possible to the target.

Advantageously for reducing complexity of manufacturing one may to select the front optical element 13 among a set of pre-established front optical elements. In this case one may optimize only the back optical element 12, to try to reach the power distribution target for the combination of the front optical element 13 and the back optical element 12.

In embodiments the determination of the values of the parameters of the first part of the front optical element 13 and the second part of the front optical 13 element is carried out by selecting the front optical element 13 among the set, introduced in the first embodiment of the method for determining the values of the parameters of the optical system 10 and comprising a maximum of 6 pre-established front optical elements.

### Manufacturing of the optical system

After realizing the method of the figure 3 or the method of the figure 5 one may use the determined values of the parameters of the optical system 10 to manufacture the optical system 10.

The back optical element 12 may be manufactured, by selecting a semifinished lens with an adapted front surface and by using digital surfacing of the back surface of the semifinished lens according to the values of the parameters of the back optical element 12.

The front optical element 13 may also be manufactured the same way or may be selected from the set of the pre-established front optical elements. Alternatively, one may use set of mass prod lenses, using power step of 0.25D, and edging the lenses to the final frame shape to obtain the front optical element 13.

### Examples of values of parameters of the optical system

In a first example, one considers a wearer emmetrope with a moderate addition (+1.5D).

Regarding the back optical element 12, one may consider one optical element with the surface facing the wave guide 2 being flat, while the other surface is shaped to provide the power. For far vision the back optical element 12 could provide zero power or a small amount of negative power (>-1.2D):

- Sback($\alpha$ FV) = -1.2D to 0D, with $\alpha$ >0°.

If the back optical element 12 provides zero power for far vision, the supplementary image will be seen at infinity by the wearer:

- Dvirtual($\alpha$ FV) = -1/Sback($\alpha$ FV) = infinity.

If the back optical element 12 provides a slightly negative power (for instance - 0.8D), the supplementary image will be seen closer than surrounding elements, here:

- Dvirtual($\alpha > 0°$) = -1/Sback($\alpha$) = 1.25 m.

Advantageously one may use a black optical element 12 providing a slightly negative power, since it allows to have a front optical element having non zero front curvature, that is more aesthetical.

The power of the near vision part of the back optical element 12 may be selected based on the prescription of the wearer. If the prescribed addition of the wearer is +1.5D, with near vision gaze angle $\alpha$ about 30°, one has:

- Dist(aNV) = 0.40m (proximity = -2.5D).
- Dseethrough(aNV) = 1/(2.5 - 1.5D) = 1m.

If one wants to have same distance for both supplementary image and see-through image, one needs to have:

- Sback(aNV) = -1/Dvirtual($\alpha$NV) = -1/Dseethrough($\alpha$NV) = -1D.

So, the back optical element 12 may have a power varying from -0.8D to -1D (regression) and may provide a regression of -0.2D.

This is consistent with the derived conditions on the back surface (assuming Prox(NV) = 2.5 D):

- $-1.5 \leq$ Sback(FV) $\leq 0$,
- $-1.5 \leq$ Sback(NV) $\leq -1$,
- Sback(NV) $\leq$ Sback(FV).

Regarding the values of the parameters of the front optical element 13, one may advantageously consider a front surface being flat and a back surface being curved.

For far vision, the power provided by the front optical element 13 needs to be selected so that combined front optical element 12 and back optical element 13 power provide zero power:

- Stotal($\alpha$FV) = 0,
- Stotal($\alpha$FV) = Sfront($\alpha$FV)+Sback($\alpha$FV) = 0D,
- Sfront($\alpha$FV) = +0.8D.

For near vision part of the front optical element 13, one needs to provide +1.5D addition, so:

- Stotal($\alpha$NV) = Sfront($\alpha$NV)+Sback($\alpha$NV) = 1.5D.
- Sfront(aNV) = 1.5D-(-1) = 2.5D.

Using these parameters, one obtains a front optical element 13 with a power of the front surface varying from +0.8D to 2.5D.

In a second example, one considers a wearer emmetrope with high addition (+2.5D). In this second example the wearer has no or little accommodation amplitude.

If one assumes that Prox(NV) = 3D, one obtains the following constraints:

- $0 \leq$ Sback(FV) $\leq 0$,
- $0 \leq$ Sback(NV) $\leq 0$,
- Sback(NV) $\leq$ Sback(FV).

Regarding the far vision parameters of the back optical elements 12, if the power is slightly negative (for instance -0.8D), the supplementary image will be seen closer than the surrounding part. In this case:

- Dvirtual($\alpha$FV) = -1/Sback($\alpha$FV) = 1.25m

Here one assumes that the wearer has no or little accommodation amplitude, so he/she will use remaining accommodation or depth of focusing to see sharp image, with potentially some loss of visual acuity. It might not practically reduce image quality, if the resolution of the supplementary image resolution is lower that eye visual acuity.

Regarding the near vision parameters of the back optical elements:

- Dist(aNV) = 0.40m,
- Dseethrough(aNV) = 1/(1/0.40 - 2.5) = infinity.

Here, one wants to have Dvirtual($\alpha$NV) being closer than infinity, at minimum same at same distance as far vision, or closer (1m for instance).

Using Dvirtual($\alpha$NV) = 1m, this means that Sback(aNV) = -1/1m=-1D.

Here, the wearer will once again perceive the supplementary image closer, and may use remaining accommodation or depth of focus, in an extended way compared to far vision.

In this case, the back optical element 12 is still regressive, with addition = - 0.2D.

This configuration is interesting since one provides low addition on back optical element (so low distortion of the supplementary image distortion, and a large field of view), while still having supplementary image being closer in near vision than in far vision.

A soft progressive design would be possible since negative addition is low, aberration would be low. This can be beneficial for supplementary image with large field of view (20° to 50°).

Regarding the parameters of the front optical elements 13, for far vision one has:

- Sfront(aFV) = +0.8D to have Stotal($\alpha$FV) = 0D.

And for near vision one has:

- Sfront(aNV) = 2.5D-(-1D) = 3.5D.

So, one is using a progressive surface for front surface of front optical element 13 with an addition of +2.7D.

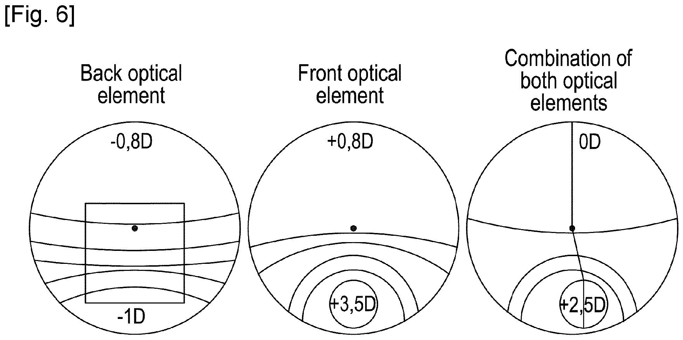

Figure 6 represents, for the second example, the power map of the back optical element 12, the front optical element 13 and the combination of the back optical element 12 and the front optical element 13.

In a third example, one considers a wearer emmetrope with low addition (+0.75D). In this third example the aim of the addition is to have an antifatigue effect.

If one assumes that Prox(NV) = 3.0D, we obtain the following constraints:

- $-3.375 \leq$ Sback(FV) $\leq 0$,
- $-3.375 \leq$ Sback(NV) $\leq -2.25$,
- Sback(NV) $\leq$ Sback(FV).

For far vision, the back optical element 12 may provide a slightly negative power (for instance Sback(aFV) = -0.8D), the supplementary image will be seen closer than the surrounding , here:

- Dvirtual($\alpha$FV) = -1/Sback($\alpha$FV).

For near vision, one may use the following equations for the back optical element 12:

- Dist(aNV) = 0.33m.
- Dseethrough(aNV) = 1/(1/0.33 - 0.75D) = 0.444m.

Here, we want to have Dvirtual($\alpha$NV) being same Dvirtual($\alpha$NV) = 0.444m, this means that one may choose Sback(aNV) = -2.25D. In this case, the back optical element is regressive, with addition = -1.45D.

Regarding the values of the parameters of the front optical element 13:

- For far vision part: Sfront(aFV) = +0.8D to have Stotal($\alpha$FV) = 0D.
- For near vision part: Sfront(aNV) = 0.75D-(-2.25D) = 3D.

So one uses a progressive surface for front surface of front optical element 13, with high addition +2.2D, in spite of having low addition for wearer prescription.

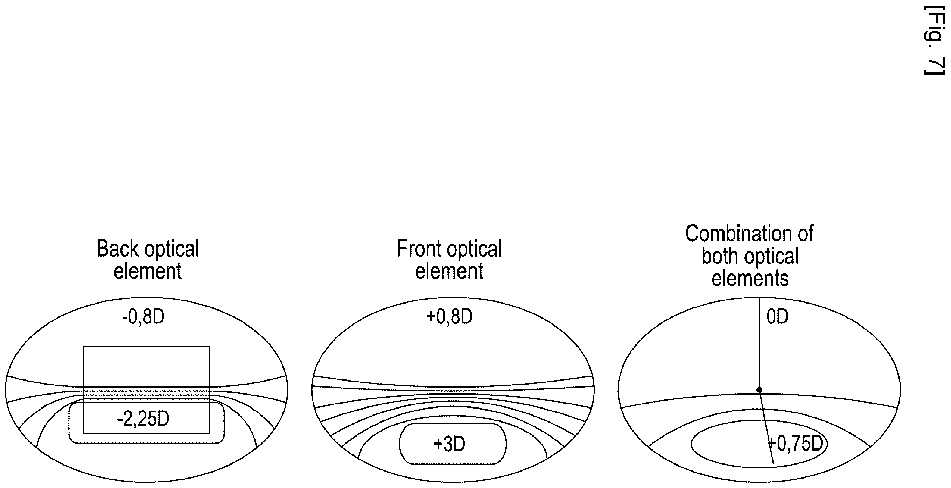

Figure 7 represents, for the third example, the power map of the back optical element 12, the front optical element 13 and the combination of the back optical element 12 and the front optical element 13.

In a fourth example, the situation is similar to the one of the third example with the following differences:

- The wearer does not need an addition for near vision, the wearer is using single vision lenses.

- One is using sharp transition between the near vision part and far vision part of both the front optical element 13 and back optical element 12. This type of the front optical element 13 and the back optical element 12 is also called "no-line bifocal", ie a lens that is substantially constant power in the upper part, constant (different) power in the bottom part, and the transition between the two is continuous but as short as possible.

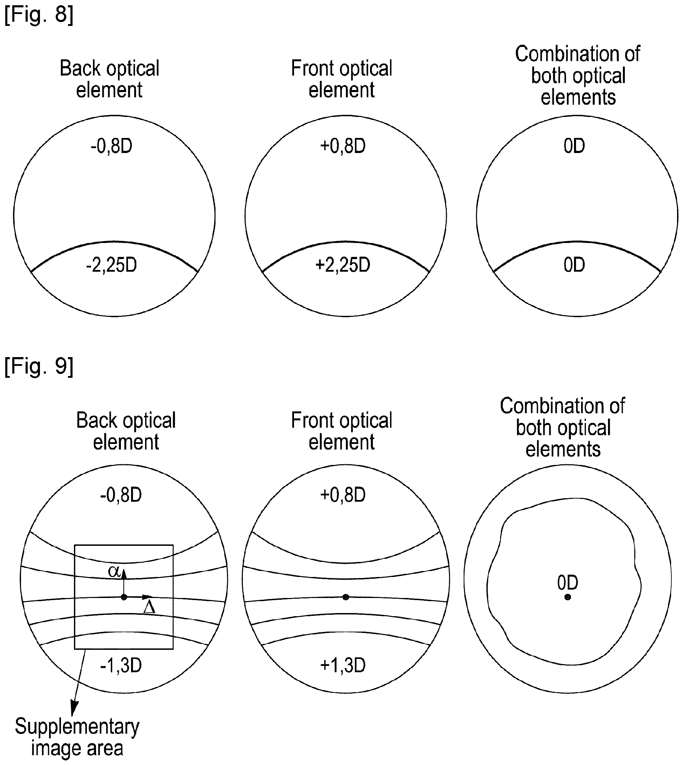

Figure 8 represents, for the fourth example, the power map of the back optical element 12, the front optical element 13 and the combination of the back optical element 12 and the front optical element 13.

In a fifth example, one considers a wearer emmetrope with no addition. In this fifth example the optical system provides closer focus for supplementary image compared to surrounding for far vision and provides very close focus for the supplementary image for near vision. This fifth example is leading to high regressive addition on the back optical element 12 and high addition progressive on the front optical element 13. Here one doesn't aim at correcting presbyopia, but simply at providing a more natural way at looking at the supplementary image. This natural way is obtained by having variable proximity, that is increasing when the wearer is lowering his gaze direction.

If one assumes that Prox(NV) = 3.00, one obtains the following constraints:

- $-4.5 \leq Sback(FV) \leq 0$,
- $-4.5 \leq Sback(NV) \leq -3$,
- $Sback(NV) \leq Sback(FV)$.

The far vision part of the back optical element 12 provides slightly negative power (for instance Sback(aFV) = -0.8D). The supplementary image will be seen closer than the surrounding, here:

- $Dvirtual(\alpha FV) = -1/Sback(\alpha FV) = 1.25m$.

For near vision part of the back optical element 12 one uses the following equations:

- Dist(aNV) = 0.33m,
- Dseethrough(aNV) = 0.33m since no addition.

Here, one want to have $Dvirtual(\alpha NV)$ being same:

- $Dvirtual(\alpha NV) = 0.33m$, this means that Sback(aNV) = -3D.

In this case, the back optical element 12 is regressive, with addition = -2.2D.

For the far vision part of the front optical element 13 one obtains:

- Sfront(aFV) = +0.8D to have Stotal($\alpha$FV) = 0D.

For the far vision part of the front optical element 13 one obtains:

- Sfront(aNV) = 3D to compensate back optical element 12 NV power.

In this fifth example, one is using a progressive front optical element 13, with high addition +2.2D. Similarly, the back optical element 12 has an addition of 2.2D. This solution may be more relevant for supplementary image viewed with a narrow field of view, since large addition will provide large level of aberration (unwanted astigmatism).

In a sixth example, one considers a wearer emmetrope with no addition. In this sixth example the optical system may provide closer focus for supplementary image vs surrounding in far vision and may provide slightly closer focus of the supplementary image for near vision than for far vision. This fifth example is leading to low regressive addition on the back optical element 12 and low addition progressive surface on the front optical element 13. Here one doesn't aim at correcting presbyopia, but simply providing a more natural image having variable proximity, that is increasing when the wearer is lowering his/her gaze direction. This will be advantageous for supplementary images seen with a large field of view.

In this sixth example one relaxes the condition that the supplementary image in near vision is closer than the surrounding in near vision.

The far vision part of the back optical elements 12 may provide slightly negative power (for instance Sback(aFV) = -0.8D). The supplementary image will be seen closer than the surrounding elements:

$$Dvirtual(\alpha FV) = -1/Sback(\alpha FV) = 1.25m$$

For the near vision part of the back optical element 12 one uses the following equations:

- Dist(aNV) = 0.33m
- Dseethrough(aNV) = 0.33m since no addition.
  Here, one wants to have Dvirtual($\alpha$NV) being closer than 1.25m but not too high, to avoid having large regressive addition on the back optical element 12, and so limited aberration that would distort the supplementary image.
- Dvirtual($\alpha$NV) = 0.77m, this means that Sback(aNV) = -1.3D.

In this case, the back optical element 12 is regressive, with addition = -0.5D.

For the far vision part of the front optical element 13 one uses:

- Sfront(aFV) = +0.8D to have Stotal($\alpha$FV)=0D.

For the near vision part of the front optical element 13 one uses:

- Sfront(aNV) = +1.3 D to compensate back optical element 12 near vision power.

So, one is using a progressive power for the front optical element 13, with addition of +0.5D. This solution is using a limited regressive addition, and so limits unwanted astigmatism and optical distortion in the supplementary image.

Figure 9 represents, for the sixth example, the power map of the back optical element 12, the front optical element 13 and the combination of the back optical element 12 and the front optical element 13.

## Claims

1.  A method for determining values of parameters of an optical system (10),

    the optical system (10) comprising a front optical element (13), a back optical element (12) and a wave guide (2), the back optical element (12) being intended to be positioned closer to an eye of a wearer of the optical system (10) than the front optical element (13), the wave guide (2) being between the front optical element (13) and the back optical element (12), the wave guide (2) having an exit surface arranged to output an image to the wearer, the method comprising:

    - selecting (301) the front optical element (13) among a set comprising a maximum of 6 pre-established front optical elements,
    - determining (302) values of parameters of the back optical element (12) based on an intended power map of the optical system (10) and the selected front optical element (13), the intended power map being a progressive power map.

2.  The method according to claim 1,
    a far vision part of each of the pre-established front optical elements having a power of less than 1.5 diopter.

3.  The method according to claim 1 or 2,
    when a power of a far vision part of a first pre-established front optical from the set of the pre-established front optical elements is higher than a power of a far vision part of a second pre-established front optical from the set of the pre-established front optical elements, then a power of a near vision part of the first pre-established front optical is lower than a power of a near vision part of the second pre-established front optical.

4.  The method according to any one of claims 1 to 3,
    the set comprising a maximum of 3 pre-established front optical elements.

5.  The method according to claim 4,
    the pre-established front optical elements being selected among:

    - an optical element with a far vision part with a power between 0.25 and 0.75 diopter, for example 0.5 diopter and a near vision part with a power between 1.5 diopters and 2 diopters for example 1.75 diopters,
    - an optical element with a far vision part with a power between 0.0 diopter and 0.5 diopter for example 0.0 diopter and a near vision part with a power between 2.5 diopters and 3 diopters for example 2.75 diopters,
    - an optical element with a far vision part with a power between 0.0 diopter and 0.5 diopter for example 0.0 diopter and a near vision part with a power between 3.25 diopters and 3.75 diopters for example 3.5 diopters.

6. The method according to claim 4,
the pre-established front optical elements being selected among:

   - an optical element with a far vision part with a power between 0.25 and 0.75 diopter, for example 0.5 diopter and an intermediate vision part with a power between 0.75 diopter and 1.25 diopter for example 1 diopter,
   - an optical element with a far vision part with a power between 0.0 diopter and 0.5 diopter for example 0.0 diopter and an intermediate vision part with a power between 1.25 diopters and 1.5 diopters for example 1.5 diopters and
   - an optical element with a far vision part with a power of 0.0 diopter and an intermediate vision part with a power between 1.5 diopters and 2 diopters for example 1.75 diopters.

7. The method according to any one of claims 1 to 6,
the intended power map being determined using a prescription of the wearer.

8. The method according to any one of the claims 1 to 7,
the wave guide (2) being configured so that the image is displayed partly in a far vision part of the optical element (10) and partly in the near vision part of the optical element (10).

9. The method according to any one of claims 1 to 8,
the front optical element (13) being selected based on a prescribed addition and possibly a location of a part of the optical system (10) on which the image is displayed by the wave guide (2).

10. The method according to claim 9,

    - when the part of the optical system (10) on which the image is displayed by the wave guide (2) comprises the far vision part of the optical system (10), an intermediate vision part of the optical system (10), and the near vision part of the optical system (10), a pre-established front optical element with an addition close but superior to the prescribed addition is selected,
    - when the part of the optical system (10) on which the image is displayed by the wave guide (2) comprises only the intermediate vision part of the optical system (10), and the near vision part of the optical system (10), then a pre-established front optical element with an addition close but superior to half of the prescribed addition is selected.

11. The method according to any one of claims 1 to 10,
the method comprising determining a power for a part of the back optical element (12) by subtracting a power of a corresponding part of the front optical element (13) to a power of a corresponding part of the intended power map.

12. The method according to any one of claims 1 to 11,
the back optical element (12) being of regressive type.

13. Method for manufacturing an optical system (10),

    the optical system (10) comprising a front optical element (13), a back optical element (12) and a wave guide (2),
    the back optical element (12) being intended to be positioned closer to an eye of a wearer of the optical system (10) than the front optical element (13),
    the wave guide (2) being between the front optical element (13) and the back optical element (12),
    the wave guide (2) having an exit surface arranged to output an image to the wearer,
    the method comprising:

    - selecting (301) the front optical element (13) among a set comprising a maximum of 6 pre-established front optical elements,
    - determining (302) values of parameters of the back optical element (12) based on an intended power map of the optical system (10) and the selected front optical element (13), the intended power map being a progressive power map,
    - manufacturing the optical system (10) based on the determined values of the parameters.

14. An optical system (10),

the optical system (10) comprising a front optical element (13), a back optical element (12) and a wave guide (2), the back optical element (12) being intended to be positioned closer to an eye of a wearer of the optical system (10) than the front optical element (13),

the wave guide (2) being between the front optical element (13) and the back optical element (12),

the wave guide (2) having an exit surface arranged to output an image to the wearer,

the front optical element (13) being selected among a set comprising a maximum of 6 pre-established front optical elements,

values of parameters of the back optical element (12) being determined based on an intended power map of the optical system and the selected front optical element (13), the intended power map being a progressive power map.

15. Eyewear (EY) comprising an optical system (10),

the optical system (10) comprising a front optical element (13), a back optical element (12) and a wave guide (2), the back optical element (12) being intended to be positioned closer to an eye of a wearer of the optical system (10) than the front optical element (13),

the wave guide (2) being between the front optical element (13) and the back optical element (12),

the wave guide (2) having an exit surface arranged to output an image to the wearer,

the front optical element (13) being selected among a set comprising a maximum of 6 pre-established front optical elements,

values of parameters of the back optical element (12) being determined based on an intended power map of the optical system and the selected front optical element (13), the intended power map being a progressive power map.

[Fig. 1a]

[Fig. 1b]

[Fig. 2]

EY

H2

F

R2

L2

A2

R1

H1

B

L1

A1

F1

[Fig. 3]

301

302

[Fig. 4]

## Sphere profile as a function of addition

| | |
|---|---|
| —— | 0.75 |
| --- | 1.0 |
| —— | 1.25 |
| --- | 1.5 |
| —— | 1.75 |
| --- | 2.0 |
| —·— | 2.25 |
| ···· | 2.5 |
| —— | 2.75 |
| —·— | 3.0 |
| ···· | 3.25 |
| —— | 3.5 |

[Fig. 5]

501

502

[Fig. 6]

Back optical element
Front optical element
Combination of both optical elements

-0,8D
+0,8D
0D

-1D
+3,5D
+2,5D

[Fig. 7]

EP 4 575 448 A1

Back optical
element

Front optical
element

Combination of
both optical
elements

-0,8D

+0,8D

0D

-2,25D

+3D

+0,75D

[Fig. 8]

| Back optical element | Front optical element | Combination of both optical elements |
|---|---|---|

-0,8D  +0,8D  0D

-2,25D  +2,25D  0D

[Fig. 9]

| Back optical element | Front optical element | Combination of both optical elements |
|---|---|---|

-0,8D  +0,8D  0D

α  Δ

-1,3D  +1,3D

Supplementary
image area

Europäisches
Patentamt

European
Patent Office

Office européen
des brevets

# EUROPEAN SEARCH REPORT

**Application Number**

EP 23 30 7280

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/244542 A1 (BOUCHIER AUDE [FR] ET AL) 4 August 2022 (2022-08-04) * abstract; claims 1-15; figures 1-7a,b; table 1 * * paragraphs [0053], [0093], [0114] * | 1-15 | INV. G01M11/02 G02C7/06 G02C7/02 G02C7/08 |
| X | US 11 150 476 B2 (ESSILOR INT [FR]) 19 October 2021 (2021-10-19) * the whole document * | 14,15 | |

**TECHNICAL FIELDS SEARCHED (IPC)**

G01M
G02C

The present search report has been drawn up for all claims

| Place of search | Date of completion of the search | Examiner |
|---|---|---|
| The Hague | 5 June 2024 | Moscelli, Nicola |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 30 7280

This annex lists the patent family members relating to the patent documents cited in the above-mentioned European search report.
The members are as contained in the European Patent Office EDP file on
The European Patent Office is in no way liable for these particulars which are merely given for the purpose of information.

05-06-2024

| Patent document cited in search report | Publication date | Patent family member(s) | Publication date |
|---|---|---|---|
| US 2022244542 A1 | 04-08-2022 | CN 114026488 A | 08-02-2022 |
| | | EP 3754388 A1 | 23-12-2020 |
| | | JP 2022537025 A | 23-08-2022 |
| | | KR 20220022056 A | 23-02-2022 |
| | | US 2022244542 A1 | 04-08-2022 |
| | | WO 2020254628 A1 | 24-12-2020 |
| US 11150476 B2 | 19-10-2021 | CN 109073897 A | 21-12-2018 |
| | | EP 3270208 A1 | 17-01-2018 |
| | | US 2019293938 A1 | 26-09-2019 |
| | | WO 2018011031 A1 | 18-01-2018 |

EPO FORM P0459

For more details about this annex : see Official Journal of the European Patent Office, No. 12/82

**REFERENCES CITED IN THE DESCRIPTION**

**Patent documents cited in the description**

- WO 2005024491 A

- WO 200195027 A

**Non-patent literature cited in the description**

- Application of optimization in computer-aided ophthalmic lens design. **PASCAL ALLIONE** ; **FRANCOISE AHSBAHS** ; **GILLES LE SAUX**. Proc. SPIE. Design and Engineering of Optical Systems, 27 August 1999, vol. II, 3737